# EUROPEAN PATENT APPLICATION

(11) **EP 2 169 548 A1**
(43) Date of publication of application: **31.03.2010**
(21) Application number: 09252327.3
(22) Date of filing: 30.09.2009
(51) Int. Cl.: G06F 9/445

(54) **Method and systems to display platform graphics during operating system initialization**

(30) Priority: 30.09.2008 US 242217
(71) Applicant: Intel Corporation, Santa Clara, CA 95052 (US)
(72) Inventor: Shang, Sean, Shanghai 201204 (CN); Fang, Hua, Shanghai (CN); Yao, Jiewen, Shanghai (CN); Zimmer, Vincent J., Federal Way, WA 98003 (US); Long, Qin, Gaoqiao Town, Shanghai 200137 (CN); Gong, Jiong, Shanghai (CN); Ni, Ruiyu, Shanghai (CN); Rothman, Michael A., Puyallup, WA 98374 (US)
(74) Representative: Beresford, Keith Denis Lewis

(57) **Abstract**

Methods and systems to display platform graphics during initialization of an computer system, including to interrupt initialization of an operating system and to update a video frame buffer with platform graphics data when the initialization of the operating system is interrupted, and to merge platform graphics data with graphics generated by operating system initialization logic. The methods and systems include virtualization methods and systems and system management mode methods and systems.

## Description

### BACKGROUND

Initialization of a computer system following a power-on reset includes platform initialization, also referred to as basic input/output system (BIOS) booting, followed by initialization of an operating system (OS), or OS booting. BIOS booting may take approximately two to three seconds. OS booting may take approximately ten to twenty seconds.

Depending upon services provided during BIOS booting, OS boot logic may draw relatively simple graphics on a display during OS booting. Since the graphics are associated with the OS logic, the graphics are typically associated with an OS vendor.

### BRIEF DESCRIPTION OF THE DRAWINGS/FIGURES

FIG. 1 is a graphic illustration of displaying platform graphics during initialization of a computer system.
FIG. 2 is another graphic illustration of displaying platform graphics during initialization of a computer system.
FIG. 3 is a process flowchart of an exemplary method of displaying platform graphics during initialization of a computer system.
FIG. 4 is a process flowchart of another exemplary method of displaying platform graphics during initialization of a computer system.
FIG. 5 is a graphical illustration of an exemplary video merge environment.
FIG. 6 is a graphical illustration of another exemplary video merge environment.
FIG. 7 is a block diagram of an exemplary computer system.
FIG. 8 is a block diagram of another exemplary computer system 800.
FIG. 9 is a graphic illustration of an exemplary OS initialization environment of computer system 800.
FIG. 10 is a process flowchart of an exemplary method of displaying platform video during initialization of computer system 800.
FIG. 11 is a block diagram of another exemplary computer system 1100.
FIG. 12 is a process flowchart of an exemplary method of displaying platform video during initialization of computer system 1100, superimposed over a graphic illustration of an initialization environment of computer system 1100.

In the drawings, the leftmost digit(s) of a reference number identifies the drawing in which the reference number first appears.

### DETAILED DESCRIPTION

Disclosed herein are methods and systems to display platform graphics during initialization of an operating system. Platform graphics may also be displayed during BIOS booting, or a portion thereof.

As used herein, the term, "platform graphics," refers to graphics other than OS initialization graphics generated by operating system initialization logic.

Platform graphics may include one or more of audio, video, still pictures, text, wallpapers, and skins. The terms "platform graphics" and "platform video" may be used interchangeably herein.

Platform graphics may include, without limitation, graphics related to third party products or services, which may include advertising graphics, graphics provided by a computer platform vendor or manufacturer, graphics associated with an entity that owns or exercises control over a computer system, including a managed hosting provider, and personal graphics.

Platform graphics may be displayed in place of OS initialization graphics. Alternatively, OS initialization graphics may be merged with platform graphics.

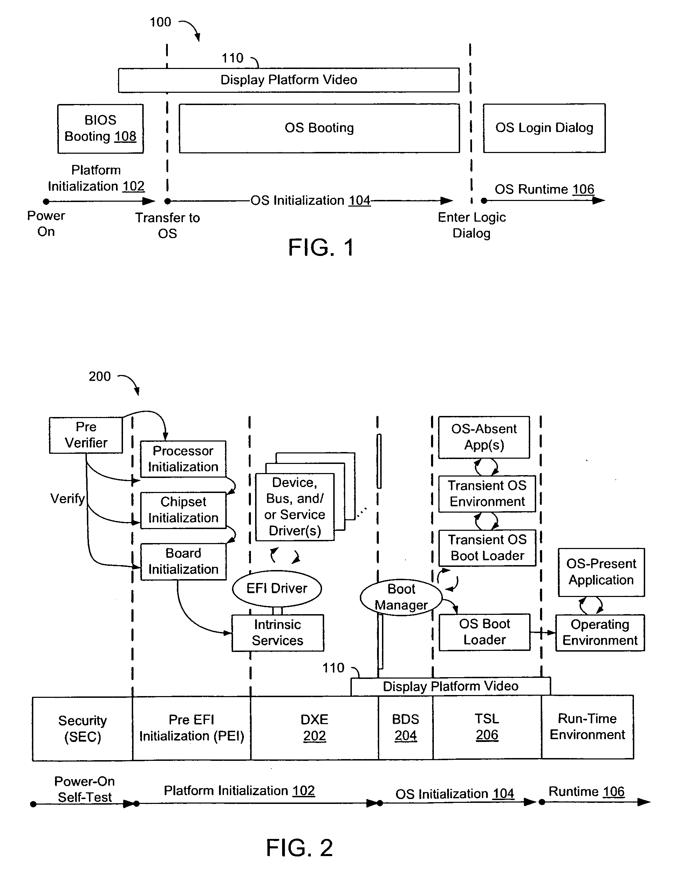

FIG. 1 is a graphic illustration of displaying platform video during a computer system initialization process 100. Initialization process 100 includes platform initialization 102 and OS initialization 104. Initialization process 100 is followed by OS runtime 106. Platform initialization 102 may follow a power-on reset, and may include one or more power-on self tests and system boot procedures, illustrated here as a basic input/output system (BIOS) boot procedure 108. Platform initialization 102 may identify and initialize one or more device drivers corresponding to physical resources of a computer system.

OS initialization 104 may include identifying and installing operating system logic.

Platform video may be displayed at 110 during OS initialization 104, and may be displayed during at least a portion of platform initialization 102.

One or more of platform initialization 102 and OS initialization 104 may include an extensible firmware interface (EFI) or uniform EFI (UEFI), as described below with respect to FIG. 2.

FIG. 2 is a graphic illustration of displaying video during a computer system initialization process 200, wherein platform initialization 102 and OS initialization 104 include initiating EFI modules. In the example of FIG. 2, platform video 110 is initiated during a driver execution environment (DXE) 202, and is displayed during a boot device select (BDS) environment 204 and a transient system load (TSL) environment 206.

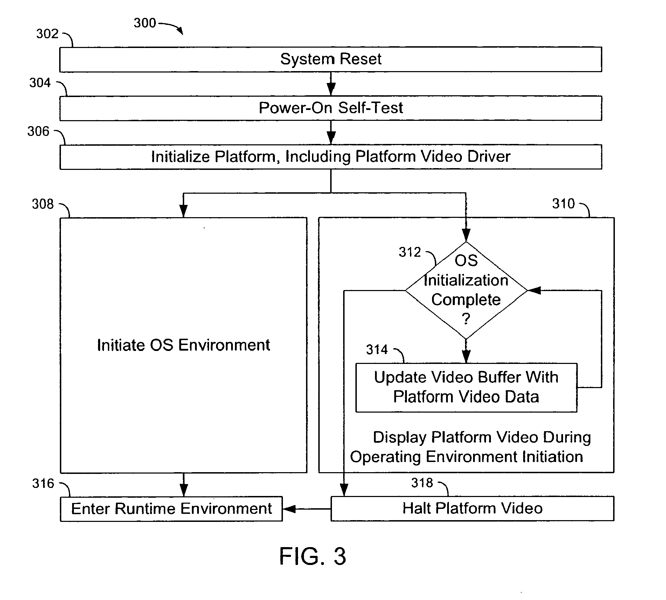

FIG. 3 is a process flowchart of an exemplary method 300 of displaying platform video during OS initialization.

At 302, a computer system is reset, such as by a power-on reset or other reset to initiate booting of the computer system.

At 304, one or more power-on self tests may be performed within the computer system.

At 306, platform initialization is performed, such as platform initialization 102 illustrated in one or more of FIGS. 1 and 2. Platform initialization may include installing one or more drivers, such as a video driver associated with a video display.

At 308, an operating system is initialized, such as OS initialization 104 illustrated in one or more of FIGS. 1 and 2.

At 310, platform video is displayed during OS initialization at 308. The platform video may be initiated during platform initialization at 306.

In the example of FIG. 3, displaying of platform video at 310 includes determining at 312 whether OS initialization is complete, and updating a video frame buffer with platform video data at 314 when OS initialization is not complete.

Updating of the video frame buffer at 314 may include retrieving and decoding data corresponding to a video frame of the platform video. Updating of the video frame buffer at 314 may include updating a portion of the video frame buffer, such as with a subset of the platform video frame data that differs from a previously displayed video frame.

Displaying of platform video at 310 may include interrupting OS initiation at 308 to update the video frame buffer at 310. The interrupting may be performed at periodic intervals. Alternatively, or additionally, the interrupting may be performed in response to one or more condition, such as, for example, in response to processor idle time, which may occur when a processor is waiting for a response from another device, such as a storage device.

Displaying of platform video at 310 may be performed without substantially impacting a time to complete OS initiation 308 since a relatively considerable amount of the time to perform OS initiation includes waiting on relatively slow input/output channels, such as storage device accesses.

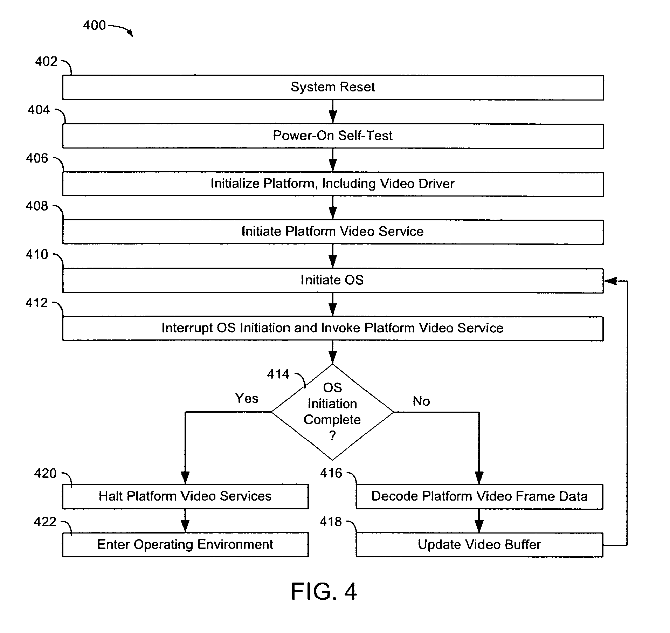

FIG. 4 is a process flowchart of an exemplary method 400 of displaying platform video during an OS initialization, including repeatedly interrupting OS initialization and updating a video frame buffer with platform video frame data during interruptions.

At 402, a computer system is reset, such as described above with respect to 302.

At 404, one or more power-on self tests may be performed within the computer system, such as described above with respect to 304.

At 406, physical resources of the computer system are initialized, such as described above with respect to 306.

At 408, a platform video service is initiated. Initiation of the platform video service may include loading instructions into memory to enable a processor to update a video frame buffer with platform video frame data upon a subsequent event. The subsequent event may include a periodic timer event and the platform video service may include initiating a timer to periodically interrupt operating system initiation and to update a video frame buffer during interruptions.

At 410, OS initialization begins.

At 412, initialization of the operating system is interrupted in response to the event, and the platform video service is invoked.

At 414, when the initialization of the operating environment is not complete, platform video frame data is decoded at 416 and the video frame buffer is updated at 418.

When the initialization of the operating environment is complete at 414, the platform video services are halted at 420 and a runtime, or operating environment is entered at 422.

Displaying of platform video may include merging platform video with OS initialization graphics, and updating the video frame buffer with merged video frame data.

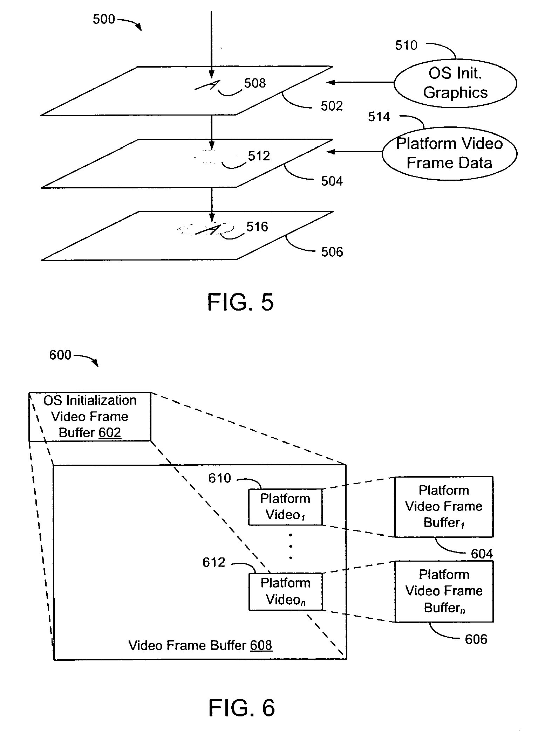

Merging may include superimposing text from OS initialization logic over platform video. FIG. 5 is a graphical illustration of an exemplary video merge environment 500, including an OS initialization video frame buffer 502, a platform video decode buffer 504, and a video frame buffer 506. Text 508 from operating system initialization graphics 510 is stored in operating system video frame buffer 502. A platform video frame image 512 from platform video frame data 514 is stored in platform video frame buffer 504. Text 508 and image 512 are merged and stored in video frame buffer 506 for display.

Merging may include superimposing one or more graphics windows over one or more other graphics windows, such as a picture-in-picture. This may be useful, for example, to display user-selectable options during platform initialization and/or OS initialization, such as a user-selectable option to access a BIOS setup configuration or proceed to OS initialization. FIG. 6 is a graphical illustration of an exemplary video merge environment 600, including an OS initialization video frame buffer 602, a plurality of platform video frame buffers 604 through 606, and a video frame buffer 608. In the example of FIG. 6, platform video 610 through 612, corresponding to platform video frame buffers 604 through 606, respectively, are merged within OS initialization graphics from OS initialization video frame buffer 602, and video frame buffer 608 is updated with corresponding merged graphics.

One or more features disclosed herein may be implemented in logic, which may include one or more of integrated circuit logic and computer program product logic.

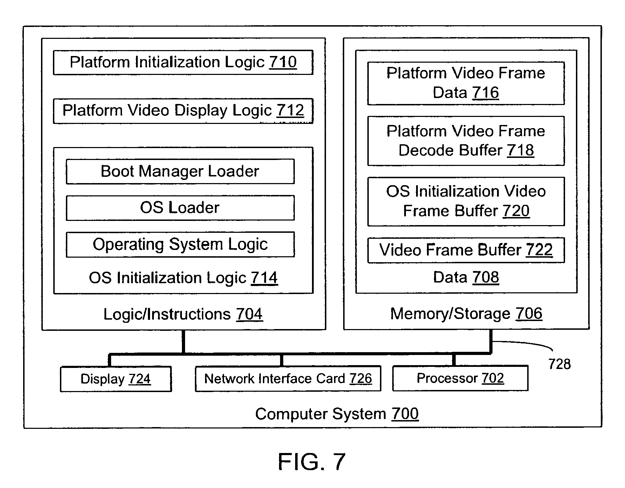

FIG. 7 is a block diagram of an exemplary computer system 700, including one or more computer instruction processing units, illustrated here as a processor 702, to execute computer program product logic, also known as instructions, code, and software.

Computer system 700 includes logic 704, which may include one or more of integrated circuit logic and computer program product logic stored on a computer readable medium to cause processor 702 to perform one or more functions in response thereto.

In the example of FIG. 7, logic 704 includes platform initialization logic 710 to cause processor 702 to initialize components of computer system 700, which may include basic input/output system (BIOS) logic, and may include extensible firmware interface (EFI) logic.

Logic 704 further includes operating system (OS) initialization logic 714 to cause processor 702 to initiate one or more operating environments. OS initialization logic 714 may include one or more of boot manager logic, OS loader logic, and OS logic.

Logic 704 further includes platform video display logic 712 to cause processor 702 to display platform video during initiation of OS logic 714. Platform video display logic 712 may include logic to cause processor 702 to display platform video during initiation of at least a portion of platform initiation logic 710. Platform video display logic 712, or a portion thereof, may be implemented within platform initialization logic 710.

Computer system 700 further includes memory/storage 706, having data 708 stored therein to be used by processor 702 in executing logic 704, and/or generated by processor 702 in response to execution of logic 704. In the example of FIG. 7, data 708 includes platform video frame data 716, a platform video frame decode buffer 718, an OS initialization video frame buffer 720, and a video frame buffer 722. Video frame buffer 722 may represent a final video frame buffer from which processor 702 sends video frame data to a display 724.

Memory/storage 706 may include a computer readable medium on which to store logic 704.

Computer system 700 may include a network interface device or card (NIC) 726 to interface with one or more communication networks. Computer system 700 may include one or more other interfaces, such a universal serial bus (USB) interface, to interface with one or more other devices.

Computer system 700 may include a communications infrastructure 728 to communicate amongst processor 702, memory/storage 706, display 724, NIC 726, and other interface devices.

Platform video frame data 716 may be received and/or updated over a network, such as through NIC 726, and may be received and/or updated secure or independent of OS initialization logic 714.

Platform video frame data 716 may be stored in one or more of firmware, flash, and a hard disc storage device.

Video frame data 716 may be received and/or updated, and stored in a hidden partition, secure from OS initialization logic 714, such as through virtualization logic or system management mode logic, examples of which are described below. For example, a virtualization machine manager (VMM) may cause processor702 to intercept integrated drive electronics (IDE) controller input/output accesses to obtain a hidden disk partition to insure that platform video frame data 716 is available even if operating system logic is reinstalled. A hidden partition may be obtained in an advanced host controller interface (AHCI) mode of computer system 700.

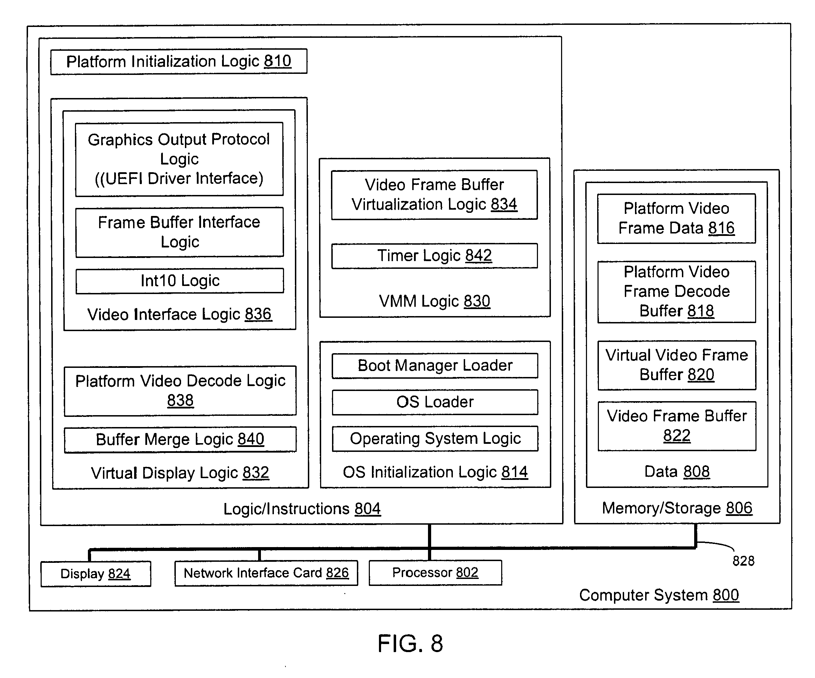

Platform video display logic 712 may include virtualization logic to cause processor 702 to virtualize one or more of video frame buffer 722 and video interfaces to an operating system initialization environment. Exemplary virtualization methods and systems are described below with respect to FIGS. 8, 9, and 10.

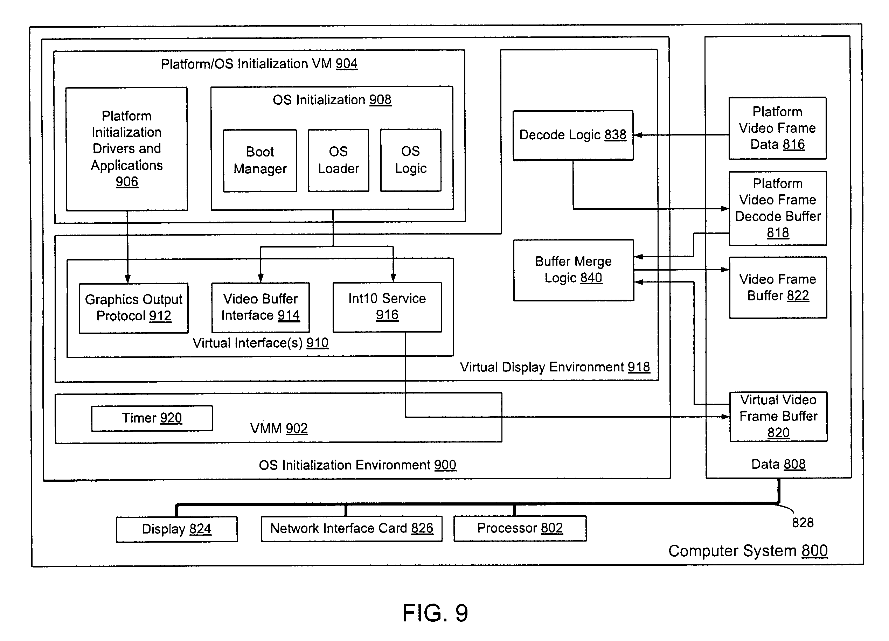

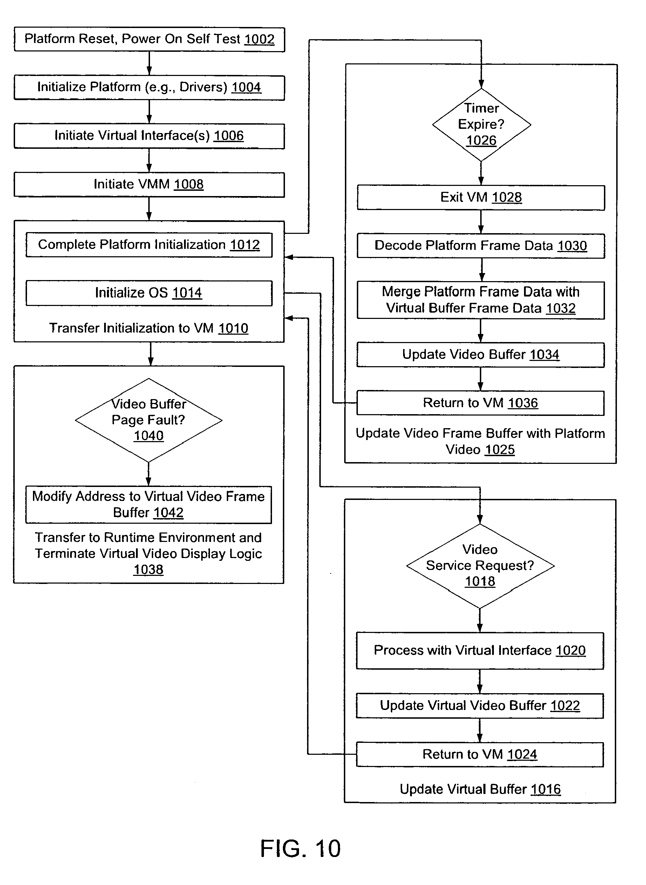

FIG. 8 is a block diagram of an exemplary computer system 800, wherein features of computer system 800 that are similar to features described above with respect to FIG. 7 are labeled with similar least-significant two-digit reference numbers. Computer system 800 is described below with respect to FIG. 9 and FIG. 10. FIG. 9 is a graphic illustration of an exemplary OS initialization environment 900 of computer system 800. FIG. 10 is a process flowchart of an exemplary method of OS initialization of computer system 800.

In FIG. 8, logic 804 includes VMM logic 830 to cause processor 802 to generate a virtual machine manager (VMM) 902 in FIG. 9, to host an OS initialization virtual machine (VM) 904. VMM logic 830 includes logic to cause processor 802 to transfer drivers and applications initiated during platform initiation, to VM 904 as drivers and applications 906. VMM logic 830 further includes logic to cause processor 802 to initialize OS initialization logic 814 within VM 904, as illustrated by OS initialization 908. VMM logic 830 further includes video frame buffer virtualization logic 834 to cause processor 802 to initialize a virtual video frame buffer 820 in FIG. 9.

Logic 804 further includes virtual display logic 832, including video interface logic 836 to cause processor 802 to initialize one or more video interfaces 910 in FIG. 9, to interface between VM 904 and virtual video frame buffer 820. Virtual display interfaces 910 may include one or more of a graphics output protocol interface 912 to interface with drivers and applications 906, a video frame buffer interface 914 to interface with OS initialization 908, and a legacy-type service 916 to receive legacy-type video service interrupts, such as Int10 video service interrupts, from legacy-type OS loader logic.

Virtual display logic 832 further includes platform video decode logic 838 to cause processor 802 to decode platform video frame data 816 and to store decoded platform video frame data in platform video frame decode buffer 818.

Virtual display logic 832 further includes buffer merge logic 840 to cause processor 802 to merge decoded platform video frame data in decode buffer 818 with OS initialization video frame data in virtual video frame buffer 820, and to update video frame buffer 822 with merged video frame data.

In the example of FIG. 9, virtual interfaces 910, decode logic 838, and buffer merge logic 840 are illustrated within a virtual display environment 918. Virtual display environment 918, or portions thereof, may reside in or represent a VM hosted by VMM 902, such as VM 904. Alternatively, or additionally, virtual display environment 918, or portions thereof, may be implemented within VMM 902.

VMM logic 830 further includes timer logic 842 to cause processor 802 to maintain a timer 920, to periodically cause processor 802 to exit VM 904 and to invoke decode logic 840 and merge logic 838, as described below with respect to FIG. 10. Upon an exit of VM 904, state values corresponding to VM 904 may be saved for later re-entry to VM 904.

In FIG. 10, at 1002, computer system 800 performs one or more power-on self-tests following a platform reset.

At 1004, platform initialization is performed. Platform initialization may be performed in response to platform initialization logic 810 in FIG. 8.

At 1006, virtual display logic 832 is invoked to cause processor 802 to initialize virtual interfaces 910 and platform video decode buffer 818.

At 1008, VMM logic 830 is invoked to cause processor 802 to initiate VMM 902 and VM 904, to transfer drivers and applications 906 to VM 904, and to initiate timer 920.

At 1010, initialization of computer system 800 is transferred to VM 904. This may include initiating any remaining logic within platform initialization logic 810 at 1012, and initiating OS initiation logic 814 within VM 904 at 1014.

During initialization at 1010, if video services are requested from VM 904, virtual video frame buffer 820 is updated at 1016 using one or more of virtual display interfaces 910. This may include receiving or intercepting a video service request at 1018, processing the request with a virtual interface at 1020, and updating virtual video frame buffer 820 at 1022. At 1024, processing returns to 1010, to continue OS initialization within VM 904.

Also during initialization at 1010, when timer 920 expires, video frame buffer 822 is updated with platform video frame data 816 at 1025. This may include determining that the timer expired at 1026, exiting VM 904 at 1028, decoding platform video frame data 816 and storing the decoded video frame data in platform video decode buffer 818 at 1030, merging contents of platform video frame buffer 818 and virtual video frame buffer 820 at 1032, and updating video frame buffer 822 with the merged data at 1034. At 1036, processing returns to 1010, to continue initialization within VM 904.

Upon completion of initialization of the operating system at 1010, processing proceeds to a runtime environment at 1038, where displaying of platform video frame data 816 may be halted. In the example of FIG. 10, this is illustrated as detecting a video frame buffer page fault at 1040 and modifying an address to virtual video frame buffer 820 at 1042.

Multiple instances of one or more virtual display logic 840 and VMM logic 830, or portions thereof, may be invoked, such as to provide picture-in-picture features as described above with respect to FIG. 6.

Where platform initialization logic 810 includes unified EFI (UEFI) logic, platform initialization logic 810 may include logic to manage an n-tuple of {Boot00X, Sound_File, Video_File, Background_Image}.

Environment 900 may include one or more OS performance drivers within wrappers or virtualization containers hosted by VMM 902. This may permit scaling and use of coder/decoders to provide additional multimedia features.

Referring back to FIG. 7, platform video display logic 712 may include logic to cause processor 702 to provide video services, including platform video services outside of a normal processor environment, such as within a system management mode (SMM) of operation.

As described below, SMM may provide video services even after firmware-based platform initialization has transferred to OS initialization. In order to prevent OS initialization from accessing a video device that is used for platform video, platform initialization may include replacing conventional video services, referred to herein as platform video services, with SMM video services. For example, a simulated firmware-based video driver may provide INT 10H services utilized by conventional OS loader systems, to transfer video service calls to SMM.

SMM is invoked by a system management interrupt (SMI). Upon an SMI, a processor executes corresponding SMI handler code, which may be stored in system firmware, and which may be unavailable to and/or isolated from application software or operating system software.

In conventional computer systems, a SMI handler may address up to 4G bytes of memory and may execute all or substantially all input/output (I/O) and applicable system instructions. A video frame buffer may be mapped to one or more locations including a A0000-BFFFF segment for VGA mode, and a 32bit physical address for SVGA mode. SMM may access video memory space of SVGA directly.

A computer system may include an I/O controller hub having a system management device to enable and control SMI resources, including a SMM software timer to generate an SMI, referred to herein as a timer SMI. When the SMM software timer is enabled, the timer SMI is periodically generated. The SMM software timer may be programmed to generate a timer SMI at intervals in a range of, for example, 0.9 milliseconds (ms) to 68 ms, including ranges of 0.9 ms to 2.1 ms, 12 ms to 20 ms, 28 ms to 36 ms, and 60 ms to 68 ms. In response to a timer SMI, a corresponding timer SMI handler in SMM may be invoked, even after firmware has transferred to OS initialization.

Depending upon available hardware devices of a computer system, an SMI based video driver may directly access all, or substantially all of a video frame buffer, even after platform initialization has transferred control to OS initialization.

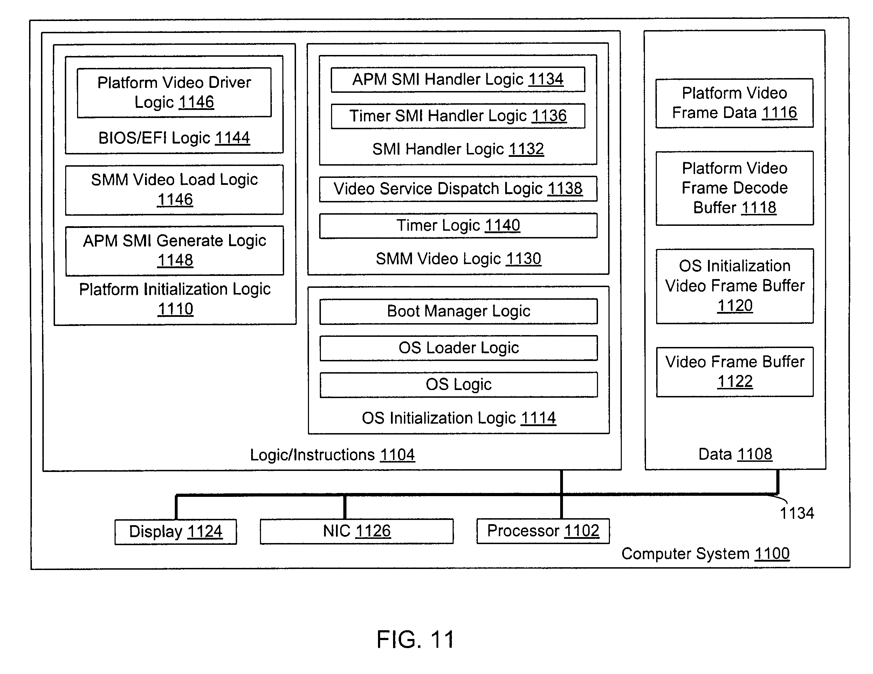

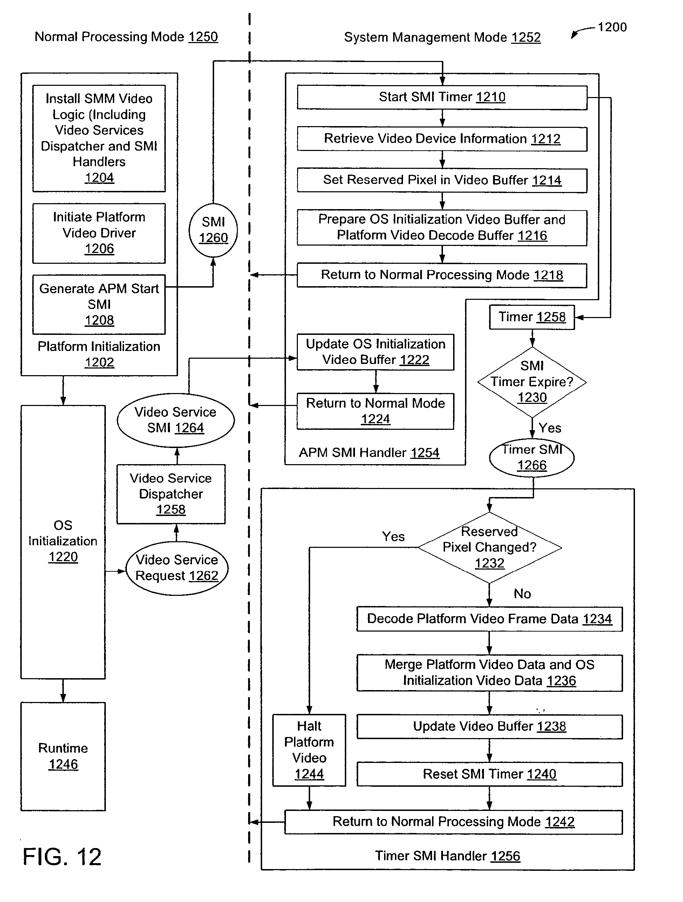

Exemplary SMM methods and systems are described below with respect to FIGS. 11 and 12.

FIG. 11 is a block diagram of an exemplary computer system 1100, wherein features of computer system 1100 that are similar to features described above with respect to FIG. 7 are labeled with similar least-significant two-digit reference numbers.

Computer system 1100 is described below with respect to FIG. 12. FIG. 12 is a process flowchart of an exemplary method 1200 of displaying platform video during initialization of computer system 1100, superimposed over a graphic illustration of an initialization environment, including a normal operating mode 1250 and a SMM 1254.

In FIG. 11, logic 1104 includes SMM video logic 1130 to cause processor 1102 to display platform video frame data 1116 from within SMM 1254, during initialization of computer system 1100.

SMM video logic 1130 includes SMI handler logic 1132 to cause processor 1102 to perform functions in SMM 1254 in response to interrupts. In the example of FIG. 11, SMI handler logic 1132 includes SMI handler logic 1134, also referred to herein as advance processing management (APM) SMI handler logic 1134, to cause processor 1102 to install an APM SMI handler 1255 in FIG. 12.

SMI handler logic 1132 further includes timer SMI handler logic 1136 to cause processor 1102 to install a timer SMI handler 1256 in FIG. 12, which is described below.

SMM video logic 1130 further includes video services dispatch logic 1138 to cause processor 1102 to install a video service dispatcher 1258 in FIG. 12, which is described below.

SMM video logic 1130 further includes SMM timer logic 1140 to cause processor 1102 to install a software-based SMM timer 1258 in SMM 1204, which is described below.

Platform initialization logic 1110 includes SMM video load logic 1142 to cause processor 1102 to load or install SMM video logic 1130.

Platform initialization logic 1110 further includes one or more of basic input/output system (BIOS) logic and extensible firmware interface (EFI) logic, illustrated here as BIOS/EFI logic 1144, including platform video driver logic 1146.

Platform initialization logic 1110 further includes APM SMI generate logic 1148 to generate an APM SMI 1260 in FIG. 12, to invoke a APM SMI handler 1254 during platform initialization.

Exemplary initialization of computer system 1100 is now described with reference to method 1200.

At 1202, platform initialization is performed following a system reset. In the example of FIG. 12, platform initialization includes installing SMM video logic 1130 at 1204 in response to SMM video load logic 1146, initiating platform video driver logic 1134 at 1206, and generating APM SMI 1260 at 1208 in response to MP SMI generate logic 1148.

In response to APM SMI 1260, processor 1102 suspends normal processing mode 1250 and invokes APM SMI handler 1254 within SMM 1252. This may include saving a state of normal processing mode 1250 in a system state map.

At 1210, timer 1258 is started. At 1212 video device information is retrieved corresponding to display 1124. At 1214, a reserved pixel may be set to a predetermined value in video frame buffer 1122. SMM video logic 1130 is configured to preclude writing platform video frame data 1116 to the reserved pixel. The reserved pixel is later used to determine whether an OS video driver is active, as described below with respect to 1232.

At 1216, platform video decode buffer 1118 and OS initialization buffer 1120 are initialized. At 1218, processing returns to normal processing mode 1250. This may include retrieving the state values corresponding to normal processing mode 1250 from the state map.

Upon return to normal processing mode 1250, platform initialization may resume at 1202 and then proceed to OS initialization at 1220, or processing may proceed directly to OS initialization at 1220.

During OS initialization at 1220, a video service request 1262 is intercepted by video services dispatcher 1258, which initiates a video service SMI 1264 to interrupt processing mode 1250 and to cause processor 1102 to invoke a video service SMI handler, illustrated here as part of APM SMI handler 1254.

At 1222, OS initialization video frame buffer 1120 is updated in response to video service request 1262, under control of APM SMI handler 1254. At 1224, processing returns to processing mode 1250.

Also during OS initialization 1220, upon an expiration of timer 1258, a timer SMI 1266 is generated at 1230 to interrupt normal processing mode 1250 and to cause processor 1102 to invoke timer SMI handler 1256 within SMM 1252.

At 1232, the reserved pixel in video frame buffer 1122 is compared to the value written at 1214. If the reserved pixel has not been altered, platform video frame data 1116 is decoded at 1234 and stored in platform video decode buffer 1118. At 1236, contents of platform video decode buffer 1118 and OS initialization video frame buffer 1120 are merged. At 1238, video frame buffer 1122 is updated with the merged video frame data. At 1240, timer 1258 may be reset. Alternatively, timer 1258 may cycle continuously.

At 1242, processing returns to OS initialization 1220 in normal processing mode 1250. Upon completion of OS initialization at 1220, processing proceeds to a runtime environment at 1246. When a video driver associated with the runtime environment is initiated, the runtime environment may overwrite the reserved pixel in video frame buffer 1122. Returning to 1232, if the reserved pixel has been altered, displaying of platform video may be halted. Halting may include stopping timer 1258 and replacing video services dispatcher 1258 with platform video services.

One or more features described above with respect to virtualization and system management mode may be implemented in various combinations with one another.

Methods and systems are disclosed herein with the aid of functional building blocks illustrating the functions, features, and relationships thereof. At least some of the boundaries of these functional building blocks have been arbitrarily defined herein for the convenience of the description. Alternate boundaries may be defined so long as the specified functions and relationships thereof are appropriately performed.

One skilled in the art will recognize that these functional building blocks can be implemented by discrete components, application specific integrated circuits, processors executing appropriate software, and combinations thereof.

## Claims

1. A method of displaying platform graphics during operating system initialization, comprising:
initializing a computer system, including initiating a video driver;
initializing an operating system on the computer system;
repeatedly interrupting the initializing of the of the operating system;
updating a video frame buffer with platform video frame data when the initializing of the operating system is interrupted; and
resuming the initializing of the operating system after the updating of the video frame buffer.

2. The method of claim 1, further including:
intercepting operating system video service requests and corresponding graphics associated with the initializing of the operating system; and
merging the graphics with the platform video frame data;
wherein the updating the video frame buffer includes updating the video frame buffer with merged video frame data.

3. The method of claim 1, further including:
halting displaying of the platform video frame data when the initializing of the operating system is complete.

4. The method of claim 1, further including:
initiating a virtual machine on the computer system;
transferring platform initialization drivers and applications to the virtual machine; and
performing the initializing of the operating system within the virtual machine;
wherein the repeatedly interrupting includes repeatedly suspending the virtual machine; and
wherein the updating of the video frame buffer includes updating the video frame buffer when the virtual machine is suspended.

5. The method of claim 4, wherein:
the performing the initializing of the operating system within the virtual machine includes,
virtualizing the video frame buffer with respect to the virtual machine, and
interfacing between the virtual machine and the virtualized video frame buffer; and
the updating of the video frame buffer includes,
decoding the platform video frame data to a platform video decode buffer,
merging video frame data from the virtual video frame buffer and the platform video decode buffer, and
updating the video frame buffer with merged video frame data.

6. The method of claim 1, wherein:
the interrupting includes interrupting a normal processor environment in response to a timer interrupt; and
the updating of the video frame buffer includes decoding the platform video frame data and performing the updating of the video frame buffer in response to the timer interrupt while the normal processor environment is suspended, and resuming the normal processor environment following the updating of the video frame buffer.

7. The method of claim 6, further including:
intercepting a video service request and corresponding graphics associated with the initializing of the operating system in the normal processor environment, and generating a video service interrupt in response to video service request;
interrupting the normal processor environment in response to the video service interrupt;
updating an operating system initialization video frame buffer with the graphics while the normal processor environment is suspended; and
resuming the normal processor environment following the updating of the operating system initialization video frame buffer;
wherein the updating of the video frame buffer includes merging the graphics in the operating system initialization video frame buffer with the decoded platform video frame data in the platform video frame decode buffer, and updating the video frame buffer with merged video frame data.

8. The method of claim 6, further including:
writing a value to a location of the video frame buffer upon during the initializing of the computer system;
precluding writing of platform video data to the location;
comparing a content of the location with the value in response to the timer interrupt; and
halting displaying of the platform video frame data when the content of the location differs from the value.

9. A computer system to display platform graphics during operating system initialization, comprising:
a computer system including a computer instruction processor;
platform initialization logic to initialize the computer system;
operating system initialization logic to initialize an operating environment of the computer system; and
platform graphics video display logic to repeatedly interrupt the operating system initialization logic and to update a video frame buffer with platform video frame data when the operating system initialization logic is interrupted.

10. The computer system of claim 9, further including:
intercept logic to cause the processor to intercept video service requests and corresponding graphics associated with the operating system initialization logic; and
merge logic to cause the processor to merge the graphics with the platform video frame data;
wherein the platform video display logic includes logic to cause the processor to update the video frame buffer with merged video frame data.

11. The computer system of claim 9, further including:
platform video display termination logic to cause the processor to halt the platform video display logic after initialization of the operating environment.

12. The computer system of claim 9, wherein the platform video display logic includes:
virtual machine manager logic to cause the processor to host a virtual machine, to transfer platform initialization drivers and applications to the virtual machine, and to invoke the operating system initialization logic within the virtual machine; and
interrupt logic to cause the processor to repeatedly suspend the virtual machine and to update the video frame buffer with the platform video frame data when the virtual machine is suspended.

13. The computer system of claim 12, wherein the virtual machine manager logic includes logic to virtualize the video frame buffer with respect to the virtual machine, and wherein the platform video display logic further includes virtual display logic, the virtual display logic including:
video interface logic to provide one or more video interfaces between the virtual machine and the virtualized video frame buffer;
platform video decode logic to decode the platform video frame data to a platform video decode buffer; and
buffer merge logic to merge video frame data from the virtual video frame buffer and the platform video decode buffer, and to update the video frame buffer with merged video frame data.

14. The computer system of claim 9, wherein the platform video display logic includes system management mode logic stored in firmware, and wherein the instruction processor is configured to suspend a normal processor environment, to store a state of the normal processor environment, and to invoke the system management mode logic in response to an interrupt, the system management mode logic including:
timer logic to repeatedly generate a timer interrupt; and
timer interrupt handler logic to decode the platform video frame data and update the video frame buffer with the platform video frame data in response to the timer interrupt, and to resume the normal processor environment following the update of the video frame buffer.

15. The computer system of claim 14, wherein the system management mode logic further includes:
video service dispatch logic to initiate a video dispatch service in the normal processor environment to cause the instruction processor to intercept a video service request and corresponding graphics associated with the operating system initialization logic, and to generate a video service interrupt in response to the video service request; and
video service interrupt handler logic to update an operating system initialization video frame buffer with the graphics in response to the video service interrupt, and to resume the normal processor environment following the update of the operating system initialization video frame buffer;
wherein the timer interrupt handler logic includes merge logic to merge the operating system initialization graphics in the operating system initialization video frame buffer with the decoded platform video frame data, and to update the video frame buffer with merged video frame data.

16. The computer system of claim 14, wherein the system management mode logic further includes platform video display termination logic, including:
logic to write a value to a location of the video frame buffer upon initiation of the system management mode logic;
logic to preclude writing platform video data to the location;
logic to compare a content of the location with the value in response to the timer interrupt; and
logic to halt the platform video display logic when the content of the location differs from the value.
